# EUROPÄISCHE PATENTSCHRIFT

(11) **EP 1 305 131 B1**
(45) Veröffentlichungstag und Bekanntmachung des Hinweises auf die Patenterteilung: **03.11.2004**
(21) Anmeldenummer: 01960520.3
(22) Anmeldetag: 19.07.2001
(51) Int. Cl.: B23K 20/12, B23K 20/24, B23K 26/06, B23K 33/00

(54) **LASERUNTERSTÜTZTES REIBRÜHRSCHWEISSVERFAHREN**
LASER SUPPORTED FRICTION STIR WELDING METHOD
PROCEDE DE SOUDAGE PAR FRICTION ET AGITATION ASSISTE PAR LASER

(30) Priorität: 25.07.2000 DE 10036170
(43) Veröffentlichungstag der Anmeldung: 02.05.2003
(73) Patentinhaber: EADS Deutschland GmbH, 85521 Ottobrunn (DE)
(72) Erfinder: PALM, Frank, 81737 München (DE)
(86) Internationale Anmeldenummer: PCT/EP2001/008345
(87) Internationale Veröffentlichungsnummer: WO 2002/007924

(56) Entgegenhaltungen:
- EP-A- 0 928 659
- WO-A-99/39861

## Beschreibung

Die vorliegende Erfindung betrifft ein laserunterstütztes Reibrührschweißverfahren gemäß dem Oberbegriff des Patentanspruchs 1.

Die Grundprinzipien des Reibrührschweißens (Friction-Stir-Welding, FSW) sind beispielsweise aus EP 0 615 480 bekannt. Zwei miteinander zu verbindende Werkstücke werden entlang eines Verbindungsbereiches in Kontakt gebracht und in dieser Position gehalten und befestigt. In den Verbindungsbereich und in das Werkstückmaterial zu beiden Seiten des Verbindungsbereiches wird eine Sonde aus härterem Material als das Werkstück unter drehender Bewegung eingeführt. Dabei erzeugt die Sonde Reibungswärme. Die gegenüberliegenden Werkstückbereiche entlang der Verbindungslinie nehmen daraufhin einen plastifizierenden Zustand ein. Die Sonde wird entlang der Verbindungslinie vorwärts bewegt, so dass sich das vor der Sonde befindende Material gegenüberliegender Werkstückbereiche plastifiziert und die plastifizierten Bereiche hinter der Sonde erhärten. Bevor das Material völlig erhärtet, wird die Sonde aus dem Verbindungsbereich entfernt. Materialien wie beispielsweise Metalle, deren Legierungen, Metall-Verbundmaterialien (sogenannte "MCC") oder geeignete Plastikmaterialien werden auf diese Weise miteinander verschweißt.

Ein weiteres, verbessertes Reibrührschweißverfahren, bei dem eine geringere Anzahl von Fehlstellen und eine glatte Oberfläche des bearbeiteten Materials erreicht wird, ist beispielsweise aus EP 0 752 926 bekannt. Diese Druckschrift beschreibt eine modifizierte Sondenanordnung. Die in den Verbindungsbereich eingeführte, rotierende Sonde ist bezüglich der Normalen geneigt, so dass die Sonde in Richtung Vorwärtsbewegung weist. Dadurch ist das im Verbindungsbereich erzeugte plastifizierte Material einem senkrechten Druck längs der Oberfläche der Werkstücke ausgesetzt. Dies hat einen verbesserten Materialfluss zur Folge und führt somit zu einer homogeneren Schweißnaht. Auf diese Weise ist es möglich, Verbindungen herzustellen, die eine geringere Anzahl von Fehlstellen und eine glatte Oberfläche aufweisen.

Ein weiteres Reibrührschweißverfahren ist beispielsweise aus WO 99/39861, welches als nächstliegender Stand der Technik anzusehen ist, bekannt. Darin ist ein Verfahren beschrieben, bei dem eine zusätzliche Wärmequelle verwendet wird. Die Wärmequelle dient zur Erwärmung des Bereiches, der unmittelbar vor der rotierenden Sonde liegt. Dadurch wird ein effektiveres Plastifizieren des Materials bewirkt, da nicht nur die Reibungswärme der sich drehenden Sonde ausgenutzt wird, sondern auch die zusätzliche Erwärmung der separaten Wärmequelle. Als zusätzliche Wärmequellen können beispielsweise Widerstandsheizungen, Induktionsspulen, Hochfrequenz-Induktionsspulen oder Laser verwendet werden.

Die Verwendung von Widerstandsheizungen ist von Nachteil, da relativ große elektrische Ströme zwischen Werkzeug und Werkstück fließen. Selbst ein guter Schutz kann eine Beeinträchtigung der Umgebung, insbesondere von Menschen, nicht ausschließen. Des weiteren sind elektrisch leitende Werkstoffe für Werkstück und Werkzeug Voraussetzung. Folglich ist eine wünschenswerte Ausbildung des FSW-Werkzeuges aus beschichteten, metallischen oder keramischen Werkstoffen nicht möglich.

Zudem ist bei den bekannten Verfahren von Nachteil, dass in Abhängigkeit der zu fügenden Al-Legierung eine oft nur begrenzte Prozessgeschwindigkeit zulässig ist. Dies ist insbesondere bei der Bearbeitung von dicken Werkstücken (typischerweise > 6mm) problematisch. Zusätzlich besteht bei dicken Werkstücken das Problem der asymmetrischen bzw. ungleichmäßigen Wärmeleitung innerhalb des Werkstückmaterials, so dass die bekannten Verfahren für die Bearbeitung derartiger Werkstücke ungeeignet sind.

Es ist somit die Aufgabe der vorliegenden Erfindung, ein Verfahren zum Reibrühschweißen zu schaffen, das kurze Schweißzeiten und eine sehr gute Verbindungsqualität insbesondere bei dicken Werkstücken ermöglicht.

Gelöst wird diese Aufgabe durch ein Verfahren mit den Merkmalen des Patentanspruchs 1. Weitere vorteilhafte Ausgestaltung des erfindungsgemäßen Verfahrens ergeben sich aus den Unteransprüchen.

Zentraler Gedanke ist hierbei, dass die Stossflächen der aneinanderzufügenden Werkstücke speziell ausgebildet sind, so dass die von einem Laser zusätzlich eingestrahlte Energie zur Erwärmung des zu plastifizierenden Materials effektiv ausgenutzt wird. Zu diesem Zweck sind die zu verbindenden Seiten der Werkstücke derart ausgebildet, dass sich die Seitenflächen im aneinandergepressten Zustand im Wurzelbereich des Stossprofils berühren, dass ein Spalt zwischen den aneinandergepressten Seitenflächen auf der in Richtung Werkzeug und Laser weisenden Werkstückoberfläche vorhanden ist, und dass das Stossprofil im Mittelbereich einen Frei- bzw. Hohlraum aufweist. Auf diese Weise wird die unerwünschte Rückreflexion der Laserstrahlung an der Werkstückoberfläche deutlich reduziert bzw. ganz vermieden. Ferner wird durch die angepaßten Seitenflächen erreicht, dass die Laserenergie zentral in den Mittelbereich der Werkstücke eindringt und sich von dort aufgrund der Wärmeleitung gleichmäßig über den gesamten Querschnitt ausbreitet. Dies ermöglicht eine wesentlich effizientere Erwärmung des Werkstückmaterials und ist insbesondere bei der Bearbeitung von Proben vorteilhaft, die dicker als 6mm sind.

Gemäß einer ersten Ausführungsform der Erfindung sind die zu verbindenden Seitenflächen der Werkstücke derart abgeschrägt, dass sich die Werkstücke im Wurzelbereich des Stossprofils berühren und ein Spalt zwischen den Seitenflächen auf der in Richtung Werkzeug und Laser weisenden Werkstückoberfläche, d.h. der dem Wurzelbereich gegenüberliegenden Werkstückoberfläche, vorhanden ist.

Gemäß einer zweiten Ausführungsform sind die zu verbindenden Seitenflächen der Werkstücke parabel- oder bogenförmig abgeschrägt und berühren sich im Wurzelbereich des Stossprofils. Vom Wurzelbereich ausgehend sind die Seitenflächen durch die Abschrägung zueinander beabstandet, wobei der Abstand in Richtung Werkzeug und Laser weisenden Werkstückoberfläche zunimmt.

Gemäß einer weiteren Ausführungsform weisen die zu verbindenden Seitenflächen der Werkstücke im Stossquerschnitt betrachtet ein halbkreisförmiges bzw. bogenförmiges Profil auf, so dass sich die Werkstücke im aneinandergepressten Zustand im Wurzelbereich berühren und ein Spalt zwischen den Seitenflächen auf der in Richtung Laser weisenden Seite der Werkstückoberfläche vorhanden ist. Der Abstand zwischen den Seitenflächen nimmt hierbei ausgehend vom Wurzelbereich zunächst zu, und nimmt dann vom Maximum im Mittelbereich zur Werkstückoberfläche hin bis auf den Wert der Spaltbreite ab.

Gemäß einer weiteren Ausführungsform sind die aneinanderzufügenden Seitenflächen der Werkstücke derart ausgebildet, dass das Stossprofil der Seitenflächen im aneinandergepressten Zustand die Form einer sogenannten Strahlfalle ("Ulbrichkugel") aufweist.

Durch das erfindungsgemäße Verfahren wird eine effektivere und gleichmäßigere Erwärmung der zu plastifizierenden Bereiche erreicht, wodurch schnellere Fügegeschwindigkeiten und eine bessere Verbindungsqualität erreicht wird. Aufgrund der höheren lokalen Werkstück- und Prozesstemperatur sinken einerseits wegen der besseren Plastifzierung die Prozesskräfte und andererseits erhöht sich die Fügegeschwindigkeit. Dies ist insbesondere von Vorteil für das Fügen von dicken Querschnitten. Somit vergrößert sich das Einsatzgebiet für das FSW-Verfahren.

Ferner ist es von Vorteil, dass das erfindungsgemäße Verfahren mehr Fertigungssicherheit bietet und zudem aufgrund der niedrigeren Prozesskräfte eine Entlastung für die FSW-Fertigungsmaschinen mit sich bringt. Somit können langfristig gesehen auch Kosten in der Fertigung eingespart werden.

Nachstehend wird das erfindungsgemäße Verfahren anhand der beigefügten Zeichnungen näher erläutert. Darin zeigt:
- Fig. 1: eine schematische Darstellung einer Anordnung zum laserunterstützten Reibrührschweißen;
- Fig. 2: eine Seitenansicht der in Figur 1 dargestellten Anordnung;
- Fig. 3: eine erste Profilgeometrie der angepassten Seitenflächen im aneinandergepressten Zustand;
- Fig. 4: ein zweites Stoßprofil der angepassten Seitenflächen im aneinandergepressten Zustand;
- Fig. 5: ein drittes Stoßprofil der angepassten Seitenflächen im aneinandergepressten Zustand; und
- Fig. 6: ein viertes Stoßprofil der angepassten Seitenflächen im aneinandergepressten Zustand.

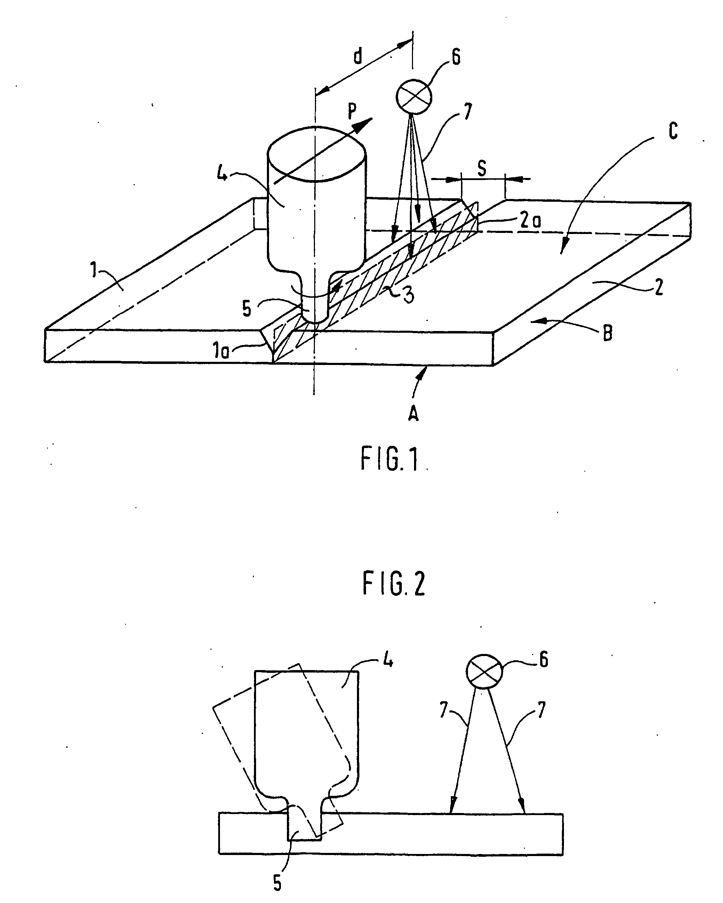

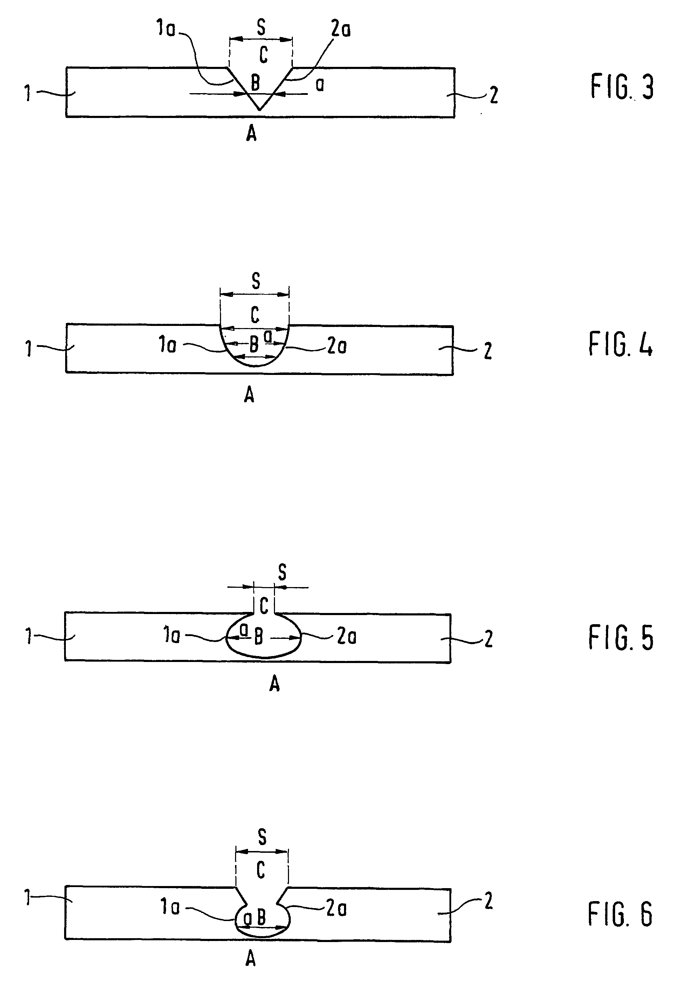

Figur 1 zeigt schematisch eine Anordnung zum laserunterstützten Reibrührschweißen. Die miteinander zu verbindenden Werkstücke 1 und 2 werden entlang ihrer Seitenflächen 1a bzw. 2a aneinandergepresst. Die aneinandergepressten Werkstücke 1, 2 werden in diesem Zustand durch eine in Figur 1 nicht dargestellte Haltevorrichtung befestigt und gehalten. In den Verbindungsbereich 3 zwischen den aneinandergepressten Seitenflächen 1a, 2a wird eine sich drehende Sonde 5 in das Werkstückmaterial eingeführt, so dass die Sonde 5 in das Werkstückmaterial zu beiden Seiten des Verbindungsbereiches 3 eindringt. Die Sonde 5 ist an einem Ende eines FSW-Werkzeuges 4 angebracht und besteht aus einem härteren Material als das Werkstück. Das FSW-Werkzeug 4 mit der Sonde 5 wird über einen in Fig.1 nicht dargestellten Motor angetrieben.

Zusätzlich befindet sich in Vorschubrichtung gesehen (Pfeilrichtung P in Fig. 1) vor dem FSW-Werkzeug 4 eine Laserlichtquelle 6. Die Laserlichtquelle 6 hat einen vorgegebenen, fest definierten Abstand d zum Werkzeug 4. Der konstante Abstand d zwischen dem Werkzeug 4 und der Laserlichtquelle 6 wird beispielsweise durch eine in Figur 1 nicht dargestellte Führungs- bzw. Haltevorrichtung gewährleistet. Die Laserlichtquelle 6 emittiert kontinuierlich oder gepulst Laserstrahlung (7) in Richtung der zu fügenden Werkstücke 1, 2. Dies bewirkt eine Vorerwärmung der entlang des Verbindungsbereiches 3 zu fügenden Werkstücke.

Der Schweißvorgang verläuft so, dass das FSW-Werkzeug 4 unter drehender Bewegung der Sonde 5 entlang des Verbindungsbereiches 3 in Vorschubrichtung (Pfeilrichtung P in Fig. 1) bewegt wird. Aufgrund des festen Abstandes d zwischen Werkzeug 4 und Laserlichtquelle 6 wird der Laser 6 ebenso wie das Werkzeug 4 entlang des Verbindungsbereiches 3 in Pfeilrichtung P bewegt. Durch die rotierende Sonde 5 wird das Werkstückmaterial zu beiden Seiten des Verbindungsbereiches 3 aufgrund der auftretenden Reibungsenergie pastifiziert. Gleichzeitig erwärmt die Laserstrahlung 7 im Vorlauf zum FSW-Werkzeug 4 das zu fügende Material entlang des Verbindungsbereiches 3. Somit wird neben der durch die Sonde 5 erzeugte Reibungswärme auch die Erwärmung durch die Laserstahlung 7 ausgenutzt. Reibungswärme und Vorwärme zusammen ergeben eine höhere lokale Werkstück- und Prozesstemperatur. Folglich sinken einerseits aufgrund der besseren Plastifizierung die Prozesskräfte und andererseits kann die Fügegeschwindigkeit heraufgesetzt werden bzw. das Fügen von dickeren Querschnitten (> 6mm) ist möglich.

Wie in Figur 2 gezeigt, ist das FSW-Werkzeug 4 senkrecht zur Werkstückoberfläche ausgerichtet. Eine schräge Positionierung von Werkzeug 4 und Sonde 5, wie in Fig. 2 durch die gestrichelte Linie dargestellt, ist auch möglich. Bei der schrägen Positionierung weist die Sonde 5 in Vorschubrichtung gesehen nach vorne; d.h. in Richtung Laser 6. Eine derartige schräge Positionierung bewirkt einen besseren Fluss des plastifizierten Materials und ermöglicht somit eine optisch schönere und homogenere Verbindung der zu fügenden Werkstücke 1, 2.

Als Laserlichtquelle 6 wird beispielsweise ein CO₂-Laser, ein Neodym-YAG-Laser oder verschiedene Halbleiterlaser- (Dioden) verwendet. Die verwendete Wellenlänge des Laserlichtes ist typischerweise ≤ 10,6 µm. Das Laserlicht kann entweder gepulst oder kontinuierlich auf den zu erwärmenden Bereich entlang der Verbindungslinie 3 eingestrahlt werden. Je nach Anwendung ist der Strahl fokussiert oder defokussiert.

Um eine möglichst effektive Ausnutzung des eingestrahlten Laserlichtes zu bewirken (d.h. erhöhte Absorption durch Mehrfachreflexion), weisen die aneinandergepressten Seitenflächen 1a, 2a eine speziell Ausgestaltung auf. Eine erste Ausführungsform zeigt Fig. 3. Die Seitenflächen der Werkstücke 1 und 2 sind abgeschrägt. Die Seitenflächen 1 a, 2a sind z.B. linear abgeschrägt, so dass sich das in Figur 3 dargestellte kegelförmige Stossprofil ergibt. Im aneinandergepressten Zustand berühren sich die Seitenflächen 1a und 2a der Werkstücke im sogenannten Wurzelbereich des Stossprofils. Der Wurzelbereich ist dabei der vom Werkzeug 4 und Laser 6 wegweisende Werkstückoberflächenbereich und ist in den Fig. 3 bis 6 mit A bezeichnet. Im Mittelbereich des Stossprofils, d.h. in der Querschnittsmitte der Werkstücke, die in Fig. 3 bis 6 mit B bezeichnet ist, berühren sich bei einem derartigen kegelförmigen Stossprofil die aneinandergepressten Seitenflächen 1a und 2a nicht. Gleichzeitig gibt es einen Spalt s zwischen den Seitenflächen 1a, 2a auf der in Richtung Werkzeug 4 und Laser 6 weisenden Werkstückoberfläche, die in Fig. 3 bis 6 mit C bezeichnet ist. Somit sind die Seitenflächen ausgehend vom Wurzelbereich derart voneinander beabstandet, dass der Abstand a zwischen den Seitenflächen 1a, 2a bis zur der in Richtung Werkzeug 4 und Laser 6 weisenden Werkstückoberfläche kontinuierlich zu nimmt. Die vom Laser 6 emittierte Laserstrahlung 7 dringt durch den Spalt s in den Mittelbereich B des Stossprofils ein, so dass die zusätzliche Wärme direkt im Stoß durch Absorption generiert und weitergeleitet wird.

Eine weitere Ausgestaltung der angepassten Seitenflächen 1 a, 2a ist in Fig. 4 zu sehen. Das in Figur 4 dargestellte Stossprofil weist eine halbkreisförmige bzw. symmetrische, in Richtung Werkzeug 4 und Laser 5 offene Bogenform auf. Die Seitenflächen 1a, 2a sind hierzu jeweils parabel- bzw. bogenförmig abgeschrägt, so dass sich die Werkstücke im aneinandergepressten Zustand im Wurzelbereich A berühren. Im Mittelbereich B ist wiederum ein Frei- bzw. Hohlraum vorhanden. In diesem Bereich berühren sich die Seitenflächen der aneinandergepressten Werkstücke 1, 2 nicht. Ebenso wie bei der in Fig. 3 dargestellten Ausgestaltung besteht auf der in Richtung Werkzeug 4 und Laser 6 weisenden Werkstückoberfläche ein Spalt s zwischen den aneinandergepressten Seitenflächen 1 a, 2a, so dass die Laserstrahlung in den Mittelbereich B vordringt. Wie zuvor nimmt der Abstand a zwischen den Seitenflächen 1a, 2a kontinuierlich vom Wurzelbereich A bis zum Erreichen der Spaltbreite s zu.

Figur 5 zeigt ein weiteres Stossprofil der angepassten Seitenflächen 1a, 2a. Hier sind die Seitenflächen 1a, 2a halbkreisförmig bzw. in einer zur jeweils anderen Seitenfläche weisenden offenen Bogenform ausgebildet. Die Seitenflächen 1a, 2a berühren sich auch hier im Wurzelbereich A. Durch die halbkreis- bzw. bogenförmige Ausgestaltung der Seitenflächen 1a, 2a besteht, ausgehend vom Wurzelbereich A, ein zunächst kontinuierlich anwachsender Abstand a zwischen den gegenüberliegenden Seitenflächen 1 a, 2a, der nach Erreichen seines Maximums im Mittelbereich B kontinuierlich bis zum Erreichen der Spaltbreite s an der Werkstückoberfläche C abnimmt.

Bei der Ausgestaltung gemäß Figur 6 sind die aneinanderzufügenden Seitenflächen 1a, 2a derart ausgebildet, dass das Stossprofil die Form einer Ulbrichkugel aufweist. Eine derartige Ausgestaltung hat den Vorteil, dass die Reflexion an der in Richtung Werkzeug und Laser weisenden Oberflächenseite völlig reduziert ist. Die Laserstrahlung wird sozusagen in der Ulbrichkugel "eingefangen". Der in den Mittelbereich B eingestrahlte Laserstrahl wird mehrfach reflektiert, so dass die Laserenergie optimal zur Erwärmung des zu plastifizierenden Materials ausgenutzt wird.

Neben den in Fig. 3 bis 6 dargestellten Stossprofilen sind auch andere Ausgestaltungen der angepassten Seitenflächen möglich. Allen Ausführungsformen ist gemeinsam, dass sich die aneinandergepressten Seitenflächen im Wurzelbereich berühren, nicht jedoch im Mittel- und Oberbereich, so dass die Seitenflächen im Mittel- und Oberbereich zueinander beabstandet sind. Die Seitenflächen 1a, 2a sind im aneinandergepressten Zustand auf der in Richtung Werkzeug 4 und Laser 6 weisenden Oberfläche C zueinander beabstandet, so dass ein Spalt s vorhanden ist. Durch diesen Spalt s dringt die Laserstrahlung 7 in den Mittelbereich B der Werkstücke ein. Dadurch gelangt die Energie des Laserlichtes zentral in die Mitte der Werkstücke 1, 2 und breitet sich dann gleichmäßig über den gesamten Querschnitt der Werkstücke 1, 2 aus. Dies ist insbesondere bei dickeren Proben von Vorteil, da auf diese Weise eine gleichmäßigere Wärmeverteilung über die gesamte Probendicke erfolgt. Dadurch ist eine zuverlässige Bearbeitung auch bei dickeren Proben gewährleistet.

Ferner wird durch die spezielle Ausbildung der Seitenflächen 1a, 2a bewirkt, dass die Laserstrahlung 7 im Mittelbereich B mehrfach reflektiert wird, wodurch Reflexionsverluste an der in Richtung Laser weisenden Werkstückoberfläche reduziert sind. Folglich ist die Erwärmung aufgrund der geringeren Verluste effektiver. Dies ist insbesondere von Vorteil bei der Bearbeitung von dicken Werkstücken. Ferner ist aufgrund der Kombination Reibungswärme und Vorwärme eine schnellere Bearbeitung möglich, wodurch die Herstellungs- bzw. Bearbeitungszeiten reduziert werden. Dies wiederum hat einen positiven Einfluss auf die Plastifizierung, so dass eine homogene Verbindung erreicht wird.

## Patentansprüche

1. Laserunterstütztes Reibrührschweißverfahren zum Verbinden von Werkstücken (1, 2), umfassend die Schritte:
- Aneinanderpressen zu verbindender Seitenflächen (1a, 2a) der Werkstücke (1,2), wodurch sich ein Verbindungsbereich (3) ergibt;
- Fortbewegen einer Schweißsonde (5) unter drehender Bewegung entlang des Verbindungsbereiches (3) und Bestrahlen des vor der Schweißsonde (5) liegenden Werkstückmaterials mit Laserstrahlung (7), so dass aufgrund von Laserenergie und Reibungsenergie zwischen Scheißsonde (5) und Werkstück (1,2) das Werkstückmaterial entlang des Verbindungsbereiches (3) plastifiziert wird und sich hinter der Schweißsonde (5) verfestigt; und
- Entfernen der Schweißsonde (5) aus dem Verbindungsbereich (3) vor dem vollständigen Erstarren des Werstückmaterials,
**dadurch gekennzeichnet, dass**
die Seitenflächen (1a, 2a) derart ausgebildet sind, dass sie sich im aneinandergepressten Zustand auf der von der Schweißsonde (5) wegweisenden Werkstückoberfläche (A) berühren, dass sie im Mittelbereich (B) bis zur Werkstückoberfläche (C) zueinander beabstandet sind, so dass zwischen den Seitenflächen (1a, 2a) auf der in Richtung Schweißsonde (5) weisenden Werkstückoberfläche (C) ein Spalt (s) besteht.

2. Verfahren nach Anspruch 1, **dadurch gekennzeichnet, dass**
die Seitenflächen (1a, 2a) linear abgeschrägt sind.

3. Verfahren nach Anspruch 1, **dadurch gekennzeichnet, dass**
die Seitenflächen (1a, 2a) parabel- oder bogenförmig abgeschrägt sind.

4. Verfahren nach Anspruch 1, **dadurch gekennzeichnet, dass**
die Seitenflächen (1a, 2a) derart ausgebildet sind, dass das durch die aneinandergepressten Seitenflächen entstehende Stossprofil kreis- oder ellipsenförmig ist, wobei ein Spalt (s) zwischen den Seitenflächen auf der in Richtung Sonde (5) weisenden Werkstückoberfläche (C) besteht.

5. Verfahren nach Anspruch 1, **dadurch gekennzeichnet, dass**
die Seitenflächen (1a, 2a) derart ausgebildet sind, dass das durch die aneinandergepressten Seitenflächen (1a, 2a) entstehende Stossprofil die Form einer Strahlfalle aufweist.

6. Verfahren nach Anspruch 1, **dadurch gekennzeichnet, dass**
die Laserstrahlung (7) von einem CO₂ -, Neodym-YAG-, Halbleiterlaser oder von einer Laserdiode emittiert wird.

7. Verfahren nach Anspruch 1, **dadurch gekennzeichnet, dass**
die Wellenlänge der Laserstrahlung (7) kleiner gleich 10,6µm ist.

8. Verfahren nach Anspruch 1, **dadurch gekennzeichnet, dass**
die Laserstrahlung (7) kreis-, ellipsen-, linienförmig oder auf andere Weise fokussiert ist, oder defokussiert ist.

9. Verfahren nach Anspruch 1, **dadurch gekennzeichnet, dass**
die Laserstrahlung (7) gepulst oder kontinuierlich emittiert wird.

## Claims

1. Laser-assisted friction stir welding method for joining workpieces (1, 2), comprising the steps:
- pressing together of lateral faces (1a, 2a) to be joined of the workpieces (1, 2), resulting in a joining zone (3);
- moving of a welding probe (5) while rotating it along the joining zone (3) and irradiation of the workpiece material located ahead of the welding probe (5) with laser radiation (7), so that as a result of laser energy and friction energy between welding probe (5) and workpiece (1, 2) the workpiece material along the joining zone (3) is plasticised and solidifies behind the welding probe (5), and
- removal of the welding probe (5) from the joining zone (3) before complete hardening of the workpiece material,
**characterised in that** the lateral faces (1a, 2a) are so configured that in the pressed-together state they are in contact at the workpiece surface (A) facing away from the welding probe (5), and **in that** they are spaced apart from one another in the middle zone (B) up to the workpiece surface (C), so that a gap (s) between the lateral faces (1a, 2a) is present in the workpiece surface (C) facing towards the welding probe (5).

2. Method according to claim 1, **characterised in that** the lateral faces (1a, 2a) are chamfered linearly.

3. Method according to claim 1, **characterised in that** the lateral faces (1a, 2a) are chamfered with a parabolic or arcuate configuration.

4. Method according to claim 1, **characterised in that** the lateral faces (1a, 2a) are so configured that the butt profile resulting from the pressing together of the lateral faces is circular or elliptical, a gap (s) between the lateral faces being present in the workpiece surface (C) facing towards the probe (5).

5. Method according to claim 1, **characterised in that** the lateral faces (1a, 2a) are so configured that the butt profile resulting from the pressing together of the lateral faces (1a, 2a) has the shape of a radiation trap.

6. Method according to claim 1, **characterised in that** the laser radiation (7) is emitted by a CO₂ laser, a neodymium-YAG laser, a semiconductor laser or a laser diode.

7. Method according to claim 1, **characterised in that** the wavelength of the laser radiation (7) is not greater than 10.6 µm.

8. Method according to claim 1, **characterised in that** the laser radiation (7) is focused in a circular, elliptical, linear or other manner, or is defocused.

9. Method according to claim 1, **characterised in that** the laser radiation (7) is emitted in a pulsed or continuous manner.

## Revendications

1. Procédé de soudage par friction et agitation assisté par laser pour relier des pièces (1, 2), comprenant les étapes consistant à :
- presser l'une contre l'autre les surfaces latérales (1a, 2a) des pièces (1, 2) à relier, ce qui permet d'obtenir une zone de liaison (3) ;
- faire avancer une sonde à soudure (5) dans un mouvement rotatif le long de la zone de liaison (3) et irradier le matériau de la pièce situé devant la sonde à soudure (5) avec un rayonnement laser (7), de telle sorte que, en raison de l'énergie laser et de l'énergie de friction entre la sonde à soudure (5) et la pièce (1, 2), le matériau de la pièce soit plastifié le long de la zone de liaison (3) et se consolide derrière la sonde à soudure (5) ; et
- enlever la sonde à soudure (5) de la zone de liaison (3) avant la solidification complète du matériau de la pièce,
**caractérisé en ce que**
les surfaces latérales (1a, 2a) sont configurées de telle sorte qu'elles se touchent à l'état pressé l'une contre l'autre sur la surface (A) de la pièce opposée à la sonde à soudure (5), elles sont distantes l'une de l'autre dans la zone centrale (B) jusqu'à la surface (C) de la pièce, de telle sorte qu'une fente (s) soit présente entre les surfaces latérales (1a, 2a) sur la surface (C) de la pièce se trouvant dans la direction de la sonde à soudure (5).

2. Procédé selon la revendication 1,
**caractérisé en ce que**
les surfaces latérales (1a, 2a) sont chanfreinées linéairement.

3. Procédé selon la revendication 1,
**caractérisé en ce que**
les surfaces latérales (1a, 2a) sont chanfreinées en forme de parabole ou d'arc.

4. Procédé selon la revendication 1,
**caractérisé en ce que**
les surfaces latérales (1a, 2a) sont configurées de telle sorte que le profilé de recouvrement résultant des surfaces latérales pressées l'une contre l'autre est circulaire ou en forme d'ellipse, une fente (s) se trouvant entre les surfaces latérales sur la surface (C) de la pièce se trouvant dans la direction de la sonde (5).

5. Procédé selon la revendication 1,
**caractérisé en ce que**
les surfaces latérales (1a, 2a) sont configurées de telle sorte que le profilé de recouvrement résultant des surfaces latérales (1a, 2a) pressées l'une contre l'autre a la forme d'un piège de rayonnement.

6. Procédé selon la revendication 1,
**caractérisé en ce que**
le rayonnement laser (7) est émis par un laser à semi-conducteur CO₂, Neodym-YAG ou par une diode laser.

7. Procédé selon la revendication 1,
**caractérisé en ce que**
la longueur d'ondes du rayonnement laser (7) est inférieure ou égale à 10,6 µm.

8. Procédé selon la revendication 1,
**caractérisé en ce que**
le rayonnement laser (7) est focalisé de manière circulaire, elliptique ou linéaire ou de toute autre manière, ou est défocalisé.

9. Procédé selon la revendication 1,
**caractérisé en ce que**
le rayonnement laser (7) est émis par impulsions ou en continu.
